# EUROPEAN PATENT SPECIFICATION

(11) **EP 4 309 933 B1**
(45) Date of publication and mention of the grant of the patent: **19.02.2025**
(21) Application number: 22185542.2
(22) Date of filing: 18.07.2022
(51) Int. Cl.: B60J 7/04

(54) **COVER ASSEMBLY FOR TRUCK BED**
ABDECKUNGSANORDNUNG FÜR EINE LKW-LADEFLÄCHE
ENSEMBLE COUVERCLE DE PLATEAU

(43) Date of publication of application: 24.01.2024
(73) Proprietor: Gi.Anso 4x4 Club S.A., 19200 Elefsina-Attikis (GR)
(72) Inventor: Michailidis, Athinodoros, 19200 ELEFSINA-ATTIKIS (GR)
(74) Representative: Araujo, Daniel

(56) References cited:
- US-A1- 2016 236 549
- US-A1- 2016 257 256
- US-A1- 2018 118 002
- US-A1- 2020 353 803

## Description

### Field of the invention

The invention relates to a cover assembly for the truck bed of a pick-up type vehicle, and in particular to a cover assembly comprising a rollable curtain including a plurality of transverse adjacent panels or slats hingedly connected and an end slat comprising one or more electric elements connected to a power source or controller board in such a manner that the electric elements can be continuously powered during operation, i.e., movement, of the cover assembly or during operation of the vehicle.

### Background

Truck bed covers are commonly used with pick-up trucks and like vehicles with cargo areas that are substantially exposed. There are known different types of covers (roll-up covers, folding covers, retractable covers, one-piece solid covers, etc.) for providing a more secure, weather-protected storage. An example of such a cover is shown in US 2018/118002 A1.

Typical motorised roll-up covers employ obstacle detection functions by measuring electrical characteristics of the motor, i.e., changes in the electrical current required to extend the rollable curtain of the cover. Such roll-up covers may compare an electrical characteristic, such as current, or voltage, with predefined thresholds and stop the operation of the motor when such threshold is exceeded, assuming presence of an obstacle. However, weather conditions, i.e., rain, snow or temperature changes, may affect the nominal characteristics of the motor without necessarily indicating an obstacle. Such false-positive situations may render typical roll-up covers inoperable under certain weather conditions.

Typical motorised roll-up covers employ physical buttons mounted at the side rail parts of the cover assembly or inside the truck bed of the vehicle, and the user can operate the cover assembly functionality without the need of a remote key fob. Due to the exposed aspect of the roll-up covers, such buttons are substantially exposed to weather conditions, dust, etc... Thus, there remains a need for an alternative way for the user to operate the cover assembly functionality without the need of a remote key fob.

Covers, and particularly roll-up covers, are moveable and rollable and sometimes it is desirable to provide power to electric elements arranged on the cover, more specifically on the end slat of the rollable curtain, such as light signals, sensors etc., to be used for multiple purposes, such as indicating that the curtain is moving (opening closing), providing extra lightning or for security purposes, i.e., detection of an obstacle within the truck bed, among others.

External batteries placed on the truck bed and trucks having wired side railings for connecting to a power source are known. However, due to the moveable/rollable aspect of the roll-up covers as well as due to the exposed nature of the cover, these solutions are not able to provide a continuous electrical connection and operation of electric elements (lights, sensors or signal transceivers) arranged on the cover, and more specifically on the end slat of the rollable curtain, while the latter is operable, i.e., in movement.

Finally, in known systems, due to the lack of electrical power at intermediate positions of the rollable curtain, it is not possible to provide the end slat with electrical elements, i.e., sensor-means or illumination, or actuators to operate the rollable curtain directly from the end slat.

### Summary of the invention

In accordance with the invention a cover assembly for a pickup truck bed is provided. The cover assembly comprises a motorised rollable curtain for selectively extending to at least partially cover the pickup truck bed and at least partially retracting to form a roll. The rollable curtain is formed of a plurality of adjacent transverse panels or slats that are hingedly connected to one another and an end slat.

According to one aspect of the invention, the cover assembly comprises one or more electric elements (illumination, signal transceivers, sensor-means, etc.). arranged on the end slat of the rollable curtain, powered and controlled by means of a controller board which is either comprised within the rollable curtain or connected to the electric elements by means of a wired connection provided in the cover assembly in such a manner that the electric elements can be continuously powered during operation, i.e., movement, of the cover assembly.

In some embodiments, the end slat may slide with respect to the rest of the rollable curtain under pressure between a first position and a second position. The end slat may comprise one or more sensor-means that may be actuated when the end slat is pushed, and send a signal to the controller board accordingly. Such signals may be processed in multiple ways by the controller board. As a first function, when the rollable curtain is stopped in a back-end position (totally closed truck bed) a signal from the sensor(s) is processed as a command from the user to open the curtain. As a second function, when the rollable curtain is stopped in a front-end position (totally opened truck bed) a signal from the sensor(s) is processed as a command from the user to close the curtain. As a third function, a signal from the sensor(s) while the roll-up cover is moving for closing the truck bed assumes presence of an obstacle and the roll-up curtain stops immediately and reverses to release such an obstacle (i.e., human hand, luggage). As a fourth function, while the roll-up cover is moving for opening the truck bed a signal from the sensor(s) is processed as a command from the user to stop the curtain.

According to another aspect of the invention, the cover assembly may further comprise solar panels arranged on at least part of the plurality of adjacent transverse panels to provide said power source to said electric elements.

According to a further aspect of the invention, the cover assembly may additionally comprise a plurality of cable guiding elements to provide a wired connection to said electric elements.

According to yet another aspect of the invention, the cover assembly may further comprise a rechargeable battery or batteries arranged in the rollable curtain.

Additional objects and advantages of the invention will become apparent to those skilled in the art upon reference to the detailed description taken in conjunction with the provided figures.

### Brief description of the drawings

Non-limiting examples of the present disclosure will be described in the following, with reference to the appended drawings, in which
Fig. 1a shows a fully extended cover assembly according to an embodiment of the invention.
Fig. 1b is a detailed view of part of the cover assembly of Fig. 1a, showing the cable guiding elements according to one embodiment of the invention.
FIG. 2a is a front perspective view of a cable guiding element according to an embodiment of the present invention.
FIG. 2b is a back perspective view of the cable guiding element of Fig. 2a.
FIG. 3 is a partial exploded top view of the cover assembly according to an embodiment of the present invention.
FIG. 4 is a side perspective view of the housing box according to an embodiment of the present invention.
FIG. 5 is a partial top view cover assembly of the cover system according to one embodiment of the present invention wherein the end slat comprises a light signal and sensor-means.
FIG. 6 shows a diagram of an electrical power connection according to an embodiment of the invention.

### Detailed description of the invention

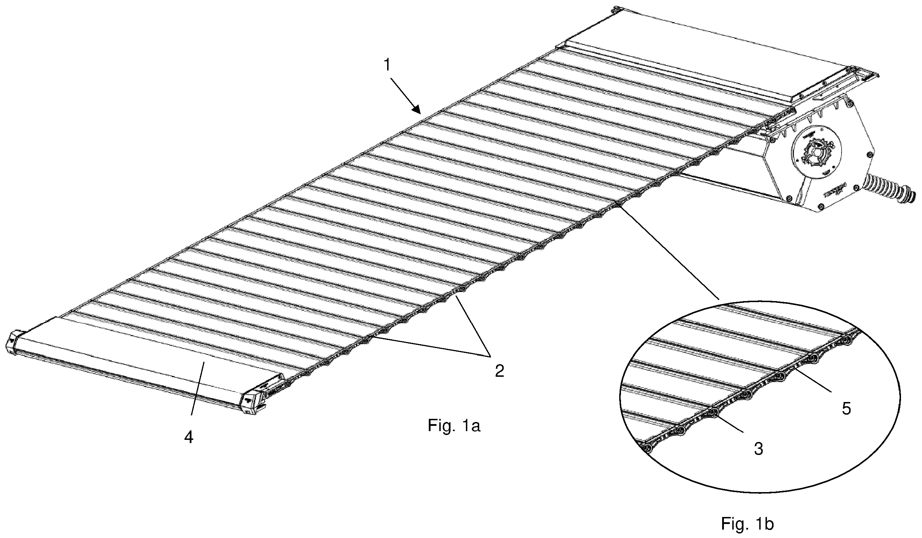

With reference to Fig. 1a, a cover assembly for the truck bed of a pick-up type vehicle according to the invention comprises a motorised rollable curtain 1, actuated by an electric motor, formed of a plurality of adjacent transverse panels 2, which are continuously connected along their transverse length by hinge joints 3, and an end slat 4, said rollable curtain 1 coupled at one end to a transverse rotatable shaft, not shown, comprised within a housing box 7, to allow winding and unwinding thereon.

The term longitudinal is to be understood as a direction parallel to a travel direction of the pickup truck.

The term transverse is to be understood as a direction transverse to a travel direction of the pickup truck.

According to the invention, the end slat 4 of the cover assembly comprises one or more electric elements 16, 17, 18, 19 moveable with the rollable curtain (1) and connected to a power source 8 (not shown).

In an embodiment of the present invention, said electric elements 16, 17, 18, 19 is a sensor or sensors 16 and/or a light signal or signals 17, 18, 19.

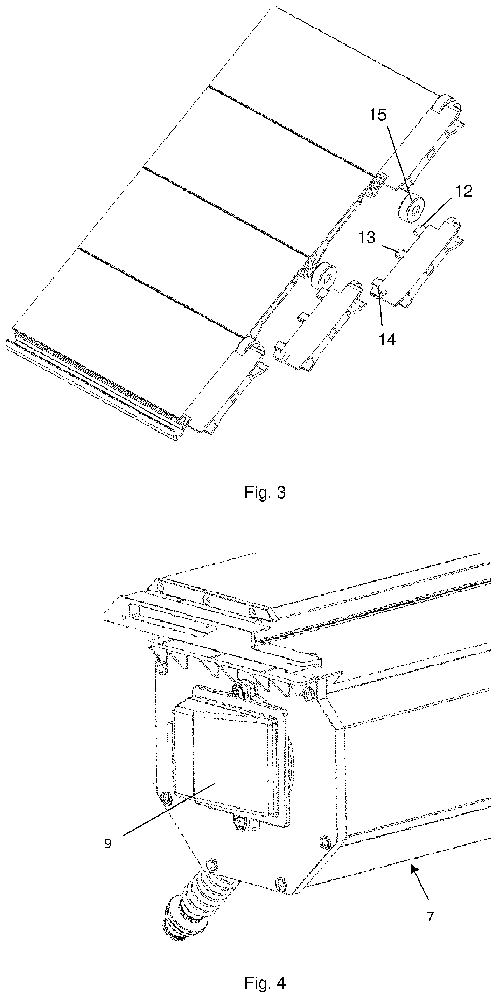

In a preferred embodiment of the invention, as shown in FIG. 4, the sensor or sensors is a push switch or switches 16 for detecting a push action on the end slat 4, which can be interpreted as an obstacle or a user command.

In another preferred embodiment of the invention, the light signal or signals is an illuminative sign or logo 17, a full-length white light 18 movable with the motorized rollable curtain 1 to illuminate the interior of the truck bed according to the user preference and/or a red light 19 that can work as an extra brake lamp, an emergency light or an extra driving beam light like the rest tailgate lights of the vehicle.

The light signal or signals 18, 19 may be in the form of a light strip.

In other embodiments, the light signal or signals 17, 18, 19 may be illuminated when the vehicle and/or the roll-up cover is in operation.

In addition, further circuitry may be incorporated with any of the embodiments of the present invention to cause the light signal or signals 17, 18, 19 to flash or vary in color and intensity according to the user's preferences.

Additional circuitry may also be incorporated with any of the embodiments of the present invention to cause the light signal or signals 17, 18, 19 to flash or vary in intensity, for example, as the rollable curtain 1 is in movement (opening or closing), when the vehicle brakes or accelerates, etc.

According to an embodiment of the present invention, the power source 8 is the vehicle's battery.

The cover assembly, then, further comprises a plurality of cable guiding elements 5, as shown in Fig. 1b, mounted to at least part of the plurality of adjacent transverse panels 2 and configured to receive cable wires therethrough for providing a wired connection to the cover assembly, such that the end slat 4 can be connected by means of said cable wires with a stationary electric elements, i.e., a smart-Al (Artificial Intelligence) control circuit board 9 mounted on the housing box and powered, i.e., by the vehicle's battery.

In this manner, the electric elements 16, 17, 18, 19 arranged in the end slat 4 may receive power from the smart-Al control circuit board 9 by means of said cable wires, supported and guided in a defined manner along at least one longitudinal length of the motorized rollable curtain 1 and connecting said electric elements 16, 17, 18, 19 with said smart-Al control circuit board 9.

A number of suitable configurations for the guiding elements 5 are contemplated.

Contemplated configurations are particularly suitable for receiving cable wires therethrough and allowing the cable wires to be winded, along with the motorized rollable curtain 1, in a circular manner without bending.

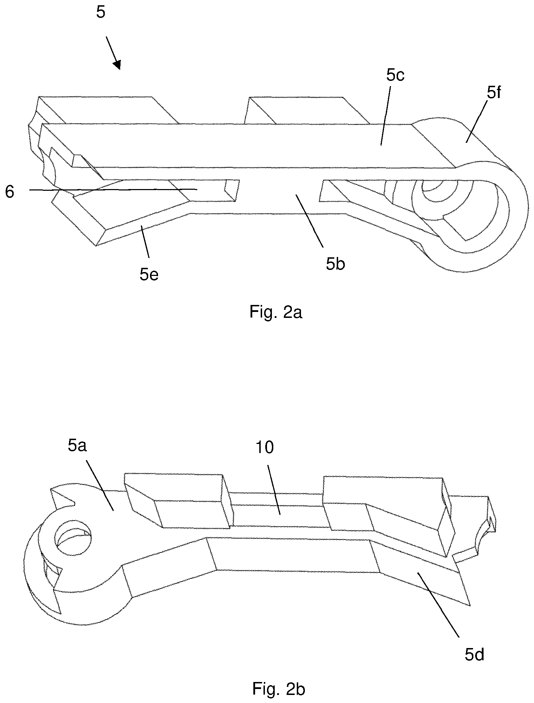

In any of the contemplated configurations, the cable guiding elements 5 comprise an inner wall 5a, an outer wall 5b, a top wall 5c, a bottom wall 5d, a distal end 5e and a proximal end 5f defining a through channel 6 over the entire length of the cable guiding elements 5 for cable wires to be supported and guided as they pass longitudinally through the cable guiding elements 5, as shown in Figs 2a and 2b.

According to an embodiment of the present invention, the cover assembly further comprises a plurality of solar panels 11 (not shown) for electrical energy generation, arranged on the top surface of at least part of the plurality of adjacent transverse panels 2, or integrated therein, that constitute the power source 8.

According to another embodiment, the power source 8 is a rechargeable battery or batteries arranged on the rollable curtain 1.

The solar panels 11 may be connected to said rechargeable battery or batteries to collect and store the energy provided by the solar panels 11 or may be directly connected to said electric elements 16, 17, 18, 19.

In an embodiment of the present invention, at least part of the plurality of adjacent transverse panels 2 have a cable guiding element 5 mounted to one or to both of its longitudinal ends. In this manner cable wires can either be arranged along only one longitudinal side of the rollable curtain 1 or along both opposed longitudinal sides of the rollable curtain 1, allowing for different cable routing arrangements.

With specific reference to Fig. 2b, the inner wall 5a of the cable guiding elements 5 may comprise a passageway 10 through which cable wires can be passed out of the through channel 6 laterally with respect to the cable guiding element 5.

The cable guiding elements 5 shown in Fig. 2a and 2b may be attached to the adjacent transverse panels 2 by means of a threaded bolt or fastener,

The cable guiding elements 5 may also comprise a plurality of transversely projecting parts 12, 13, 14, as shown in Fig.3, which extend inside the transverse panels 2 for providing additional attaching means. That is, the cable guiding elements 5 may have a design profile corresponding to the design profile of the transverse panels 2 for better fit.

Transversely projecting parts 12, 13, 14 may vary in configuration, number, arrangement, etc.

In another embodiment, the housing box 7 may comprise helical trackways arranged on an inner surface of the side walls thereof, to help guide the rollable curtain 1 free of excessive frictional resistance upon extending or retracting the same. In such an embodiment, the cable guiding elements 5 may comprise a ball bearing 15 to minimize the rolling friction between the transverse panels 2 and the helical trackways.

In an embodiment of the present invention, the solar panels 11 have an electrical connector in which positive and negative terminals of the panel are connected to a cable wire, passing through passageway 10 of a cable guiding element 5 mounted to only one longitudinal end of a panel 2 comprising a solar panel 11, in such a manner that cable wires run along only one longitudinal length of the rollable curtain 1 to connect the solar panels 11 to the rechargeable battery or batteries arranged in the rollable curtain 1 or directly to the electric elements 16, 17, 18, 19.

In another embodiment of the present invention, the solar panels 11 may have a positive terminal at one end and a negative terminal at the other end, such that cable wires, passing through passageway 10 of corresponding cable guiding elements 5 mounted to both longitudinal ends of a panel 2 comprising a solar panel 11, in such a manner that cable wires run along opposed longitudinal lengths of the rollable curtain 1 to connect the solar panels to the rechargeable battery or batteries arranged in the rollable curtain 1 or directly to the electric elements 16, 17, 18, 19.

The end slat 4 may further comprise an open-close mechanism, in cooperation with the sensor or sensors 16, such that, for example, when pressure is exerted to the end slat 4, the sensor or sensors 16 may be activated sending a signal to the said smart-Al control circuit board 9. Such activation signal is interpreted as an open-close signal and the electric motor of the cover assembly is activated to either open, close or stop the movement of the motorised rollable curtain 1 depending on its previous state. That is, if the curtain is closed, then a push of the end slat 4 may activate the sensor or sensors 16 and the curtain 1 may open. Accordingly, when the curtain 1 is open, a push of the end slat 4 may activate the sensor or sensors 16 and the curtain 1 may close. Such operations are only possible if the electric elements 16, 17, 18, 19 of the end slat 4 are provided with electric power at any intermediate position, that is if a wired connection is present between-stationary and moving or rolling elements, with respect to the housing box of the cover or with respect to the vehicle, to activate the sensor or sensors 16 and to allow communication of the sensors with the said smart-Al control circuit board 9.

The end slat 4 may differ from the other slats (i.e., adjacent transverse panels 2) of the rollable curtain 1 in at least two ways. First, the end slat 4 may comprise two parts, a first part hingedly attached to the next slat and a second part slidable and/or pivotable with respect to the first part. Between the two parts there may be space to host at least the sensor or sensors 16. By pushing the second part, the second part may slide or pivot with respect to the first part of the end slat 4 and cause the sensor or sensor 16 to be actuated. The second part may also host the light signal or signals 17, 18, 19.

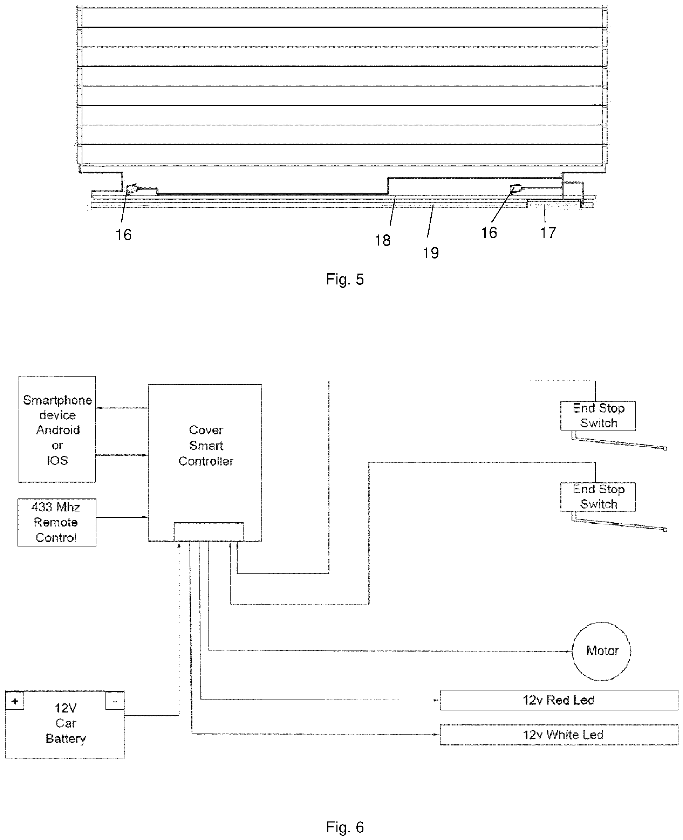

The motorised cover system is further configured to be remotely controlled by means of a remote-control element or a mobile application installed in a smartphone, as shown in FIG. 5, such that the electric elements 16, 17, 18, 19 can be activated or disactivated, the brightness of the same, for example when the electric element is a light signal or signals 17, 18, 19 can be adjusted and the curtain 1 can be automatically opened or closed by remotely activating the electric motor of the cover system.

The electric motor is driven by the smart-Al (Artificial Intelligence) control circuit board 9, that may be mounted on a side wall of the housing box 7, as shown in FIG. 4, of the rollable curtain 1. Said smart-Al controller circuit board is preferably connected to the vehicle battery.

A control panel means, not shown, may be mounted on or adjacent the housing box and/or in the truck cab and/or in the side rails and/or in the end slat 4.

The electric motor may be remotely controlled by a remote controller, or an app installed in a smartphone. The rollable curtain 1 can thus be stopped and operated remotely at any spot.

It is also contemplated that the light signal or signals 17, 18, 19 may be automatically actuated upon deployment of the rollable curtain 1 or may also operate in conjunction with the headlights, parking lights or tail lights of the vehicle.

Alternatively, the light signal or signals 17, 18, 19 can further include a light sensor-means, not shown, wherein the light sensor-means activates the lighting signal or signals 17, 18, 19 upon the happening of a selected event, such as at darkness, dusk, or times of severe weather conditions, for example.

While the embodiments have been described in detail in the description, the same is to be considered illustrative and not restrictive in character, being understood that it would be obvious to those skilled in the art that various other changes and modifications may be made without departing from the scope of the disclosure as defined by the claims.

## Claims

1. A cover assembly for the truck bed of a pick-up type vehicle, said assembly comprising a motorised rollable curtain (1) formed by a plurality of adjacent transverse panels (2), which are continuously connected along their transverse length by hinge joints (3), and an end slat (4),
**characterized in that** said curtain (1) is coupled at one end to a transverse rotatable shaft to allow winding and unwinding thereon,
and **in that** the end slat (4) comprises one or more electric elements (16, 17, 18, 19) movable with the rollable curtain (1) and connected to a smart-Al control circuit board (9) which is a stationary electric element mounted on a housing box (7), in such a manner that the electric elements (16, 17, 18, 19) are continuously powered during operation of the cover assembly.

2. The cover assembly according to claim 1, wherein said one or more electric elements is a sensor or sensors (16) and/or a light signal or signals (17, 18, 19).

3. The cover assembly according to claim 2, wherein the light signal or signals (17, 18, 19) is an extra brake lamp and/or an extra driving beam light and/or an emergency light.

4. The cover assembly according to claim 2, wherein the light signal or signals (18, 19) is a light strip.

5. The cover assembly according to claim 2, wherein the sensor or sensors is a push switch or switches (16).

6. The cover assembly according to claim 5, wherein the sensor or sensors (16) is configured to operate as an actuator of the rollable curtain 1 and/or as an obstacle detector.

7. The cover assembly according to preceding claims 1 to 6, wherein the cover assembly further comprises a plurality of solar panels arranged on at least part of the plurality of adjacent transverse panels (2) or integrated therein.

8. The cover assembly according to claims 1 to 6, wherein the power source is a rechargeable battery or batteries arranged in the rollable curtain 1.

9. The cover assembly according to claims 7 and 8, wherein the rechargeable battery or batteries is charged by means of said solar panels (11).

10. The cover assembly according to claim 1 to 6, wherein the power source is the vehicle's battery.

11. The cover assembly according to preceding claims, wherein the cover assembly further comprises a plurality of cable guiding elements (5) mounted to at least part of the plurality of adjacent transverse panels (2) and configured to receive cable wires therethrough, such that the cable wires can be supported and guided in a defined manner along at least one longitudinal length of the rollable curtain (1), for providing a wired connection between the electric elements (16, 17, 18, 19), the smart-Al control circuit board (9) and the vehicle battery.

12. The cover assembly according to claim 11, wherein the cable guiding elements (5) comprise an inner wall (5a), an outer wall (5b), a top wall (5c), a bottom wall (5d), a distal end (5e) and a proximal end (5f) defining a through channel (9) over the entire length of the cable guiding elements (5) for cable wires to be supported and guided as they pass longitudinally through the cable guiding elements (5).

13. The cover assembly according to claim 11, wherein the inner wall (5a) comprises a passageway (10) through which cable wires may be passed out of the through channel (6) laterally, with respect to the cable guiding element (5), to and/or from the transverse panel (2) to which the guiding element (5) is mounted to.

14. The cover assembly according to preceding claims, wherein the electric elements (16, 17, 18, 19) are configured to be remotely controlled.

15. The cover assembly according to claim 14, wherein the electric elements (16, 17, 18, 19) are remotely controlled by means of a remote-control element or an app installed in a smartphone.

## Patentansprüche

1. Abdeckungsanordnung für die Lkw-Ladefläche eines Fahrzeugs des Pick-up-Typs, wobei die Anordnung einen motorisierten rollbaren Vorhang (1) umfasst, der durch eine Vielzahl von benachbarten Querpaneelen (2) gebildet wird, die entlang ihrer Querlänge mittels Scharniergelenken (3) und einer Endleiste (4) durchgehend verbunden sind,
**dadurch gekennzeichnet, dass** der Vorhang (1) an einem Ende an eine drehbare Querwelle gekoppelt ist, um das Aufwickeln und Abwickeln darauf zu ermöglichen,
und dadurch, dass die Endleiste (4) ein oder mehrere elektrische Elemente (16, 17, 18, 19) umfasst, die mit dem rollbaren Vorhang (1) bewegbar und mit einer intelligenten Al-Steuerschaltungsplatine (9) verbunden sind, die ein stationäres elektrisches Element ist, das an einem Gehäusekasten (7) montiert ist, derart, dass die elektrischen Elemente (16, 17, 18, 19) während des Betriebs der Abdeckungsanordnung kontinuierlich mit Strom versorgt werden.

2. Abdeckungsanordnung nach Anspruch 1, wobei das eine oder die mehreren elektrischen Elemente ein Sensor oder Sensoren (16) und/oder ein Lichtsignal oder -signale (17, 18, 19) ist.

3. Abdeckungsanordnung nach Anspruch 2, wobei das Lichtsignal oder die Lichtsignale (17, 18, 19) eine zusätzliche Bremsleuchte und/oder ein zusätzliches Fernlicht und/oder eine Notleuchte ist.

4. Abdeckungsanordnung nach Anspruch 2, wobei das Lichtsignal oder die Lichtsignale (18, 19) ein Lichtband ist.

5. Abdeckungsanordnung nach Anspruch 2, wobei der Sensor oder die Sensoren ein oder mehrere Druckschalter (16) ist.

6. Abdeckungsanordnung nach Anspruch 5, wobei der Sensor oder die Sensoren (16) dazu ausgelegt ist, als ein Aktuator des rollbaren Vorhangs (1) und/oder als ein Hindernisdetektor betrieben zu werden.

7. Abdeckungsanordnung nach einem der vorhergehenden Ansprüche 1 bis 6, wobei die Abdeckungsanordnung ferner eine Vielzahl von Solarpaneelen umfasst, die auf mindestens einem Teil der Vielzahl von benachbarten Querpaneelen (2) angeordnet oder darin integriert sind.

8. Abdeckungsanordnung nach den Ansprüchen 1 bis 6, wobei die Stromquelle eine aufladbare Batterie oder Batterien ist, die im rollbaren Vorhang (1) angeordnet sind.

9. Abdeckungsanordnung nach den Ansprüchen 7 und 8, wobei die eine oder die mehreren aufladbaren Batterien mittels der Solarpaneele (11) aufgeladen wird.

10. Abdeckungsanordnung nach den Ansprüchen 1 bis 6, wobei die Stromquelle die Batterie des Fahrzeugs ist.

11. Abdeckungsanordnung nach vorhergehenden Ansprüchen, wobei die Abdeckungsanordnung ferner eine Vielzahl von Kabelführungselementen (5) umfasst, die an mindestens einem Teil der Vielzahl von benachbarten Querpaneelen (2) montiert und dazu ausgelegt sind, zum Bereitstellen einer drahtgebundenen Verbindung zwischen den elektrischen Elementen (16, 17, 18, 19), der intelligenten Al-Steuerschaltungsplatine (9) und der Fahrzeugbatterie Kabeldrähte dadurch aufzunehmen, derart, dass die Kabeldrähte in einer definierten Weise entlang mindestens einer Längslänge des rollbaren Vorhangs (1) gestützt und geführt werden können.

12. Abdeckungsanordnung nach Anspruch 11, wobei die Kabelführungselemente (5) eine Innenwand (5a), eine Außenwand (5b), eine obere Wand (5c), eine Bodenwand (5d), ein distales Ende (5e) und ein proximales Ende (5f) umfassen, die über die gesamte Länge der Kabelführungselemente (5) für Kabeldrähte, die zu stützen und zu führen sind, wenn sie längs durch die Kabelführungselemente (5) verlaufen, einen Durchgangskanal (9) definieren.

13. Abdeckungsanordnung nach Anspruch 11, wobei die Innenwand (5a) eine Durchführung (10) umfasst, durch die Kabeldrähte seitlich aus dem Durchgangskanal (6) mit Bezug auf das Kabelführungselement (5) zum und/oder vom Querpaneel (2), an dem das Führungselement (5) montiert ist, geleitet werden können.

14. Abdeckungsanordnung nach vorhergehenden Ansprüchen, wobei die elektrischen Elemente (16, 17, 18, 19) dazu ausgelegt sind, ferngesteuert zu werden.

15. Abdeckungsanordnung nach Anspruch 14, wobei die elektrischen Elemente (16, 17, 18, 19) mittels eines Fernsteuerelements oder einer in einem Smartphone installierten App ferngesteuert werden.

## Revendications

1. Ensemble de couverture pour la plateforme d'un véhicule de type pick-up, ledit ensemble comprenant un rideau (1) motorisé enroulable formé par une pluralité de panneaux transversaux (2) adjacents, qui sont connectés de manière continue sur leur longueur transversale par des articulations à charnière (3), et une latte d'extrémité (4),
**caractérisé en ce que** ledit rideau (1) est accouplé au niveau d'une extrémité à un arbre transversal rotatif pour permettre son enroulement et son déroulement, et **en ce que** la latte finale (4) comprend un ou plusieurs éléments électriques (16, 17, 18, 19) mobiles avec le rideau (1) enroulable et connectés à une carte de circuit imprimé de commande à IA intelligente (9) qui est un élément électrique stationnaire monté sur une boîte de logement (7), de manière à ce que les éléments électriques (16, 17, 18, 19) soient alimentés de manière continue pendant le fonctionnement de l'ensemble de couverture.

2. Ensemble de couverture selon la revendication 1, dans lequel ledit ou lesdits éléments électriques sont un ou des capteurs (16) et/ou un ou des signaux lumineux (17, 18, 19).

3. Ensemble de couverture selon la revendication 2, dans lequel le ou les signaux lumineux (17, 18, 19) sont un feu de freinage supplémentaire et/ou un feu de route supplémentaire et/ou un feu d'urgence.

4. Ensemble de couverture selon la revendication 2, dans lequel le ou les signaux lumineux (18, 19) sont une bande lumineuse.

5. Ensemble de couverture selon la revendication 2, dans lequel le ou les capteurs sont un ou des interrupteurs à poussoir (16).

6. Ensemble de couverture selon la revendication 5, dans lequel le ou les capteurs (16) sont configurés pour fonctionner comme un actionneur du rideau (1) enroulable et/ou comme un détecteur d'obstacles.

7. Ensemble de couverture selon les revendications 1 à 6 précédentes, dans lequel l'ensemble de couverture comprend en outre une pluralité de panneaux solaires agencés sur au moins une partie de la pluralité de panneaux transversaux (2) adjacents ou intégrés dans ceux-ci.

8. Ensemble de couverture selon les revendications 1 à 6, dans lequel la source d'énergie est une ou des batteries rechargeables agencées dans le rideau (1) enroulable.

9. Ensemble de couverture selon les revendications 7 et 8, dans lequel la ou les batteries rechargeables sont chargées au moyen desdits panneaux solaires (11).

10. Ensemble de couverture selon les revendications 1 à 6, dans lequel la source d'énergie est la batterie du véhicule.

11. Ensemble de couverture selon les revendications précédentes, dans lequel l'ensemble de couverture comprend en outre une pluralité d'éléments de guidage de câble (5) montés sur au moins une partie de la pluralité de panneaux transversaux (2) adjacents et configurés pour recevoir des fils de câble à travers ceux-ci, de manière à ce que les câbles puissent être supportés et guidés d'une manière définie sur au moins une longueur longitudinale du rideau (1) enroulable, pour fournir une connexion câblée entre les éléments électriques (16, 17, 18, 19), la carte de circuit imprimé de commande à IA intelligente (9) et la batterie du véhicule.

12. Ensemble de couverture selon la revendication 11, dans lequel les éléments de guidage de câble (5) comprennent une paroi interne (5a), une paroi externe (5b), une paroi supérieure (5c), une paroi inférieure (5d), une extrémité distale (5e) et une extrémité proximale (5f) définissant un canal traversant (9) sur toute la longueur des éléments de guidage de câble (5) pour que les fils de câble soient supportés et guidés lorsqu'ils passent longitudinalement à travers les éléments de guidage de câble (5).

13. Ensemble de couverture selon la revendication 11, dans lequel la paroi interne (5a) comprend un passage (10) à travers lequel les fils de câble peuvent passer hors du canal traversant (6) de manière latérale, par rapport à l'élément de guidage de câble (5), vers et/ou depuis le panneau transversal (2) sur lequel l'élément de guidage (5) est monté.

14. Ensemble de couverture selon les revendications précédentes, dans lequel les éléments électriques (16, 17, 18, 19) sont configurés pour être commandés à distance.

15. Ensemble de couverture selon la revendication 14, dans lequel les éléments électriques (16, 17, 18, 19) sont commandés à distance au moyen d'un élément de commande à distance ou d'une application installée sur un smartphone.
